# EUROPÄISCHE PATENTANMELDUNG

(11) **EP 1 798 831 A2**
(43) Veröffentlichungstag der Anmeldung: **20.06.2007**
(21) Anmeldenummer: 06123399.5
(22) Anmeldetag: 02.11.2006
(51) Int. Cl.: H02G 3/18

(54) **Elektrisches Installationsgerät**

(30) Priorität: 15.12.2005 DE 102005059959
(71) Anmelder: Merten GmbH & Co. KG, 51674 Wiehl (DE)
(72) Erfinder: Vicktorius, Richard, 50739 Köln (DE); Nilsson, Annika, 50733 Köln (DE)
(74) Vertreter: Selting, Günther

(57) **Zusammenfassung**

Ein elektrisches Installationsgerät wie Schalter oder Stecker weist einen aus Isolierstoff bestehenden Sockel (11) auf, der in einer Wanddose untergebracht werden kann. Für den Fall, dass die Länge des Sockels (11) zu groß ist und dieser nicht in die Wanddose passt, ist der aus Metall bestehende Tragring (20) verschiebbar an dem Sockel (11) angebracht und durch Rastelemente (30) in mindestens zwei unterschiedlichen Positionen fixierbar. Dadurch kann der Tragring (20) so angeordnet werden, dass nur ein Teil des Sockels (11) in die Wanddose ragt und der andere Teil nach vorne vorsteht.

## Beschreibung

Die Erfindung betrifft ein elektrisches Installationsgerät mit einem aus Isolierstoff bestehenden Sockel, einem den Sockel tragenden Tragring und einem dem Sockel vorgesetzten Frontelement.

Elektrische Installationsgeräte wie Steckdosen, Schalter, Dimmer u. dgl. haben einen Sockel, der die Funktionsbauteile trägt und von einem Tragrahmen nach hinten absteht. Bei der Installation des Gerätes wird der Sockel in eine Wanddose eingesetzt, wobei der Tragring sich an die Wandoberfläche anlegt. Durch Festziehen von Spreizkrallen wird der Tragring mit dem daran befestigten Sockel in Bezug auf die Wanddose fixiert.

Elektrische Installationsgeräte werden zunehmend mit Zusatzfunktionen ausgestattet und mit entsprechenden elektrischen oder elektronischen Schaltungen versehen. Dadurch erhält der Sockel, dem auch die elektrischen Komponenten zuzurechnen sind, eine vergrößerte Längenausdehnung, so dass er häufig in eine übliche Wanddose nicht oder nur schwer hinein passt. Dabei ist zu berücksichtigen, dass eine Wanddose außer dem Sockel noch die aus der Wand kommenden Drähte für den Anschluss des Installationsgerätes aufnehmen muss.

Es gibt Wanddosen unterschiedlicher Tiefe. Die übliche Tiefe von Wanddosen beträgt 40 mm. Daneben gibt es auch Wanddosen mit einer Tiefe von 60 mm. In den tieferen Wanddosen kann praktisch jede Art von elektrischem Installationsgerät installiert werden, jedoch sind derartige Wanddosen relativ selten. Insbesondere muss der Käufer eines Installationsgerätes, das in eine vorhandene Wanddose eingesetzt werden soll, die Tiefe dieser Wanddose berücksichtigen.

Der Erfindung liegt die Aufgabe zugrunde, ein elektrisches Installationsgeräte anzugeben, das wahlweise in Verbindung mit einer tieferen oder weniger tiefen Wanddose installiert werden kann.

Das elektrische Installationsgerät der vorliegenden Erfindung ist durch die Merkmale des Patentanspruchs 1 definiert. Hiernach ist der Tragring längs des Sockels verschiebbar und in mindestens zwei Positionen fixierbar.

Das Installationsgerät bietet den Vorteil, dass der Tragring in Bezug auf den Sockel verstellbar ist. In einer ersten Stellung, die als Normalstellung bezeichnet werden kann, ist der Tragring an dem vorderen Ende des Sockels befestigt, so dass der Sockel in voller Länge in die Installationsdose hineinragen kann. In einer zweiten Stellung ist der Tragring im mittleren Bereich des Sockels fixiert. Hierbei ragt nur der hintere Teil des Sockels in die Installationsdose hinein, während der vordere Teil nach vorne vorsteht. Eine derartige Position des Tragringes ist dann sinnvoll, wenn die betreffende Wanddose eine Tiefe hat, die nicht ausreicht, um die gesamte Länge des Sockels aufzunehmen. Das Installationsgerät kann auch in der Weise benutzt werden, dass im installierten Zustand ein Teil der Länge nach vorne aus der Wanddose herausragt.

Wanddosen haben normalerweise eine Tiefe von 40 mm. Zur Unterbringung von Installationsgeräte, die einen längeren Sockel aufweisen, gibt es auch Wanddosen mit einer Tiefe von 60 mm. Sockel von größerer Länge sind insbesondere bei solchen Installationsgeräten anzutreffen, die neben der Funktion als Steckdose oder Schalter noch eine Zusatzfunktion haben, wobei der Sockel eine elektrische oder elektronische Schaltung trägt, beispielsweise eine Zeitschaltung. Derartige Installationsgeräte können dann bei einer tieferen Wanddose oder bei einer Altinstallation, bei der nur eine kürzere Wanddose zur Verfügung steht, montiert werden ohne dass unterschiedliche Gerätetypen erforderlich wären.

Gemäß einer bevorzugten Ausgestaltung der Erfindung ist ein wahlweise zu benutzender Distanzring vorgesehen, der das Frontelement des Installationsgerätes verlängert. Das Frontelement ist in der Regel eine Frontplatte, eventuell mit Steckdosentopf. Wenn sich der Tragring am Sockel in der zurückliegenden Position befindet und der Sockel folglich nach vorne aus der Wanddose vorsteht, überbrückt der Distanzring den Zwischenraum zwischen dem Frontelement und der Wand. Der Distanzring nimmt vorzugsweise die gleiche Grundfläche ein wie das Frontelement, so dass er sich außen bündig an dieses anschließt. Er ist auch vorzugsweise in gleicher Weise farblich und materialmäßig gestaltet wie das Frontelement.

Der Sockel kann einen flanschartigen vorderen Rand aufweisen, der einen Endanschlag für den Tragring bildet. Dieser Rand kann entweder durchgehend oder mit Unterbrechungen ausgestattet sein. Er dient als Begrenzung für die vordere Position des Tragringes. Der Rand kann Fixierelemente zum Zentrieren des Distanzringes relativ zu dem Tragring bilden. Die Zentrierelemente sorgen einerseits für eine Zentrierung und andererseits für eine Drehsicherung des Distanzringes in Bezug auf den Tragring bzw. den Sockel.

Gemäß einer bevorzugten Ausgestaltung der Erfindung ist der Sockel als Gehäuse ausgebildet und er weist eine umlaufende Seitenwand und einen Boden auf. Der Sockel bildet damit ein Gehäuse, das außer Anschlussklemmen für den Anschluss externer Installationsdrähte auch einen Raum zur Aufnahme elektronischer Komponenten enthält. Außerdem trägt der Sockel die üblichen mechanischen Komponenten elektrischer Installationsgeräte wie Schaltkontakte bzw. Steckerfassungen.

Der Sockel trägt vorzugsweise flexible Rastelemente zum Fixieren des Tragrings, die quer zur Seitenfläche des Sockels federn. Die Rastelemente dienen zum Festhalten des Tragrings in der jeweiligen Position. Sie bilden eine Schnappverbindung zum Einrasten des Tragringes und können durch manuelle Krafteinwirkung deformiert werden, um den Tragring zu lösen. Vorzugsweise sind die Rastelemente sägezahnförmig.

Im folgenden wird unter Bezugnahme auf die Zeichnungen ein Ausführungsbeispiel der Erfindung näher erläutert.

Es zeigen:
- Fig. 1: Eine Seitenansicht des elektrischen Installationsgerätes dessen Sockel sich in einer Wanddose großer Tiefe befindet,
- Fig. 2: eine Darstellung wie Fig. 1, jedoch ohne Wanddose und ohne Frontelement und Blendrahmen,
- Fig. 3: eine perspektivische Ansicht des Installationsgerätes in Verbindung mit einer Wanddose geringer Tiefe,
- Fig. 4: das Installationsgerät nach Fig. 3, jedoch ohne Wanddose, Frontelement und Distanzring und
- Fig. 5: eine vergrößerte Darstellung der Einzelheit V aus Fig. 4.

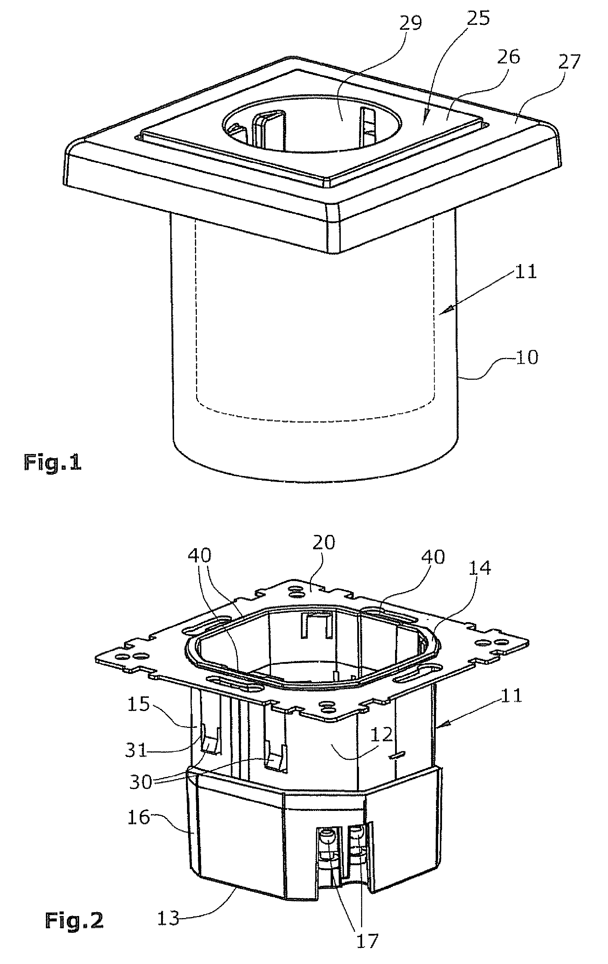

In den Figuren 1 und 2 ist ein elektrisches Installationsgerät, nämlich eine Steckdose, dargestellt, und zwar in Fig. 1 in Verbindung mit einer üblichen Wanddose 10, in die der Sockel eingesteckt ist. Das Installationsgerät weist gemäß Fig. 2 einen aus Isolierstoff bestehenden Sockel 11 auf, der ein langgestrecktes Gehäuse bildet, welches eine Seitenwand 12 und einen Boden 13 aufweist. Die Frontseite des Gehäuses ist offen. Hier ist ein flanschartiger umlaufender Rand 14 vorgesehen, der von der umlaufenden Seitenwand 12 nach außen absteht. Das Gehäuse besteht im vorliegenden Fall aus einem Oberteil 15 und einem Unterteil 16. Das Oberteil 15 enthält die üblichen mechanischen Steckdosenkomponenten, während das Unterteil 16 elektronische Komponenten enthält und außerdem Anschlussklemmen 17 zum Anschluss externer Installationsleitungen aufweist.

Der Sockel 11 ist von einem Tragring 20 umgeben, der aus starrem Blech besteht. Bei der Wandmontage legt sich der Tragring 20 bündig gegen die Außenfläche der Wand in der das Installationsgerät zu befestigen ist. Der Tragring 20 weist eine Mittelöffnung auf, durch die der Sockel 11 hindurch ragt. Der Rand 14 des Sockels 11 passt nicht durch die Mittelöffnung hindurch und stützt sich an der Vorderfläche des Tragrings 20 ab. In der in Fig. 2 dargestellten Position befindet sich der Tragring 20 am vorderen Ende des Sockels 11.

Der Sockel 11 ist ferner mit (nicht dargestellten) Haltemitteln versehen, mit denen er an der Wanddose 10 befestigt werden kann, z. B. mit Spreizkrallen, die durch Festziehen einer Schraube nach außen gespreizt werden.

Das Installationsgerät weist ferner ein Frontelement 25 auf, das dem Sockel 11 vorgesetzt und an diesem befestigt ist. Das Frontelement 25 besteht aus einer Frontplatte 26 mit einem einstückig angeformten Steckdosentopf 29 zum Einstecken eines Steckers. Das Frontelement 25 wird mit einer Schraube, die durch den Boden des Steckdosentopfes 29 hindurch geht, an dem Sockel 11 befestigt.

Fig. 1 zeigt ferner den Blendrahmen 27, der das Frontelement 25 in bekannter Weise umgibt. Der Blendrahmen 27 wird durch das Frontelement 25 festgehalten. Er stützt sich mit seinem umlaufenden Rand an der Wand, in der die Wanddose 10 untergebracht ist, ab.

In Fig. 1 ist die Erstreckung des Sockels 11 innerhalb der Wanddose 10 in Phantomlinien dargestellt. Bei der Wanddose 10 handelt es sich um eine Wanddose mit einer Länge von 60 mm. Hinter dem Sockel 11 befindet sich noch ein hinreichender Bereich für die Unterbringung der aus der Wand kommenden Kabel.

Der Tragring 20 ist längs des Sockels 11 verschiebbar. In der ersten Position, die er in Fig. 2 einnimmt, wird er durch (nicht dargestellte) vordere Rastelemente gehalten. Hierbei handelt es sich im federelastische sägezahnförmige Rasten, die den Tragring in Anlage an der rückwärtigen Seite des Randes 14 des Sockels 11 halten.

Ähnliche Rastelemente 30 sind als rückwärtige Rastelemente in Fig. 2 sichtbar, jedoch in umgekehrter Orientierung. Die Rastelemente 30 sind jeweils federnde Zungen, die in einer Aussparung 31 der Seitenwand 12 angeordnet sind und mit einer Schrägfläche nach außen vorstehen. Der Tragring 20 kann über die Rastelemente 30 geschoben werden, die dann vorübergehend elastisch zurückweichen und anschließend wieder vorspringen. Im vorspringenden Zustand greifen die Rastelemente 30 über den Tragring und halten diesen gegen einen Anschlag, der von der Seitenwand absteht, gedrückt.

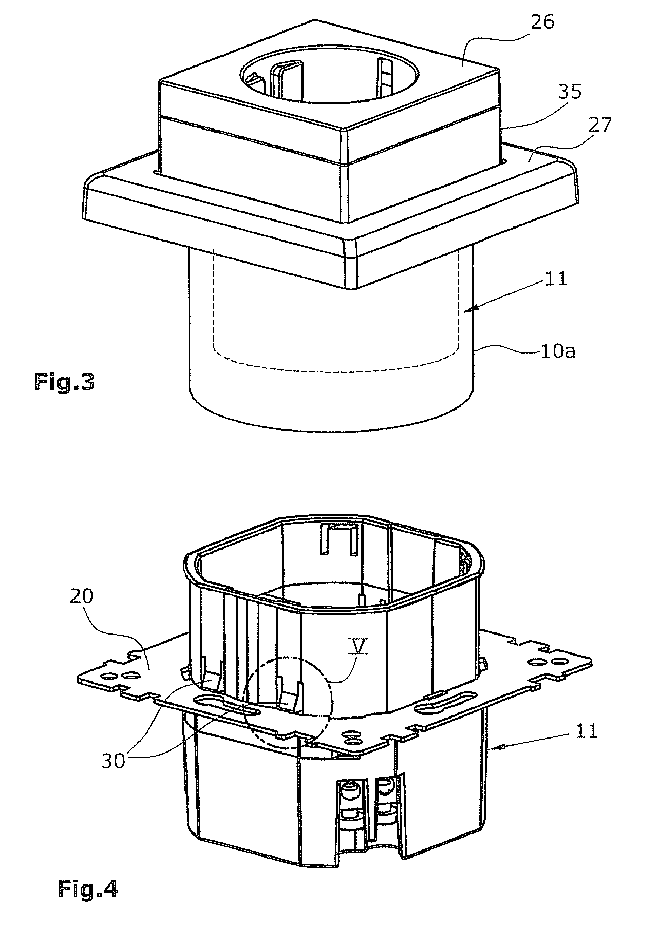

Fig. 3 zeigt die Montage des elektrischen Installationsgeräts in einer Wanddose 10a von "normaler" Tiefe, die beispielsweise 40 mm beträgt. Da der Sockel 11 hierfür zu lang ist, steht ein Teil des Installationsgeräts nach vorne aus dem Blendrahmen 27 heraus, wie dies in Fig. 3 dargestellt ist. Dies hat zur Folge, dass diejenige Länge des Sockels 11 , die in die Wanddose 10a hineinragt, kürzer ist als im Falle von Fig. 1, so dass auch der längere Sockel 11 in der kürzeren Wanddose 10a untergebracht werden kann. Um den vorstehenden Teil des Installaticansgerätes zu verdecken, ist ein Distanzring 35 vorgesehen, der von begleichter Seitenlänge ist wie das Frontelement 25, das gegenüber dem Blendrahmen 27 in diesem Fall nach vorne versetzt ist. Der Distanzring 35 verlängert also die Seitenwände des Frontelements 25 nach hinten und bewirkt dessen Anschluss an den Blendrahmen 27.

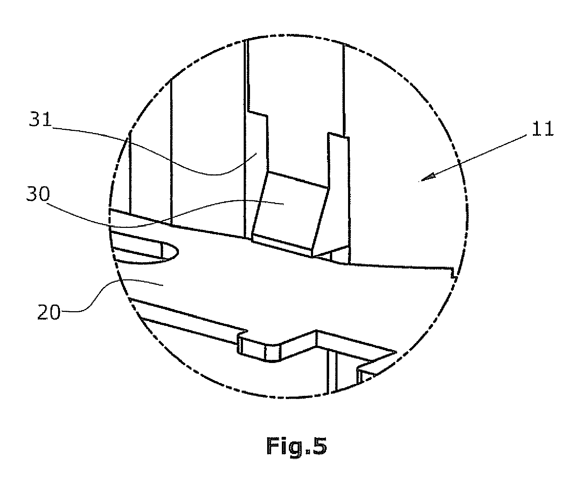

In Fig. 4 befindet sich der Tragring 20 in der zurückliegenden zweiten Position am Sockel 11. Wie aus Fig. 4 zu erkennen ist, halten die Rastelemente 30 den Tragring 20 gegen Vorschieben zurück. Dies ist in Fig. 5 vergrößert dargestellt.

Der Rand 14 hat gerade Abschnitte, die Fixierelemente 40 zum Zentrieren des Distanzringes 35 relativ zu dem Tragring 20 bilden. Der Distanzring übergreift die Fixierelemente 40 und wird durch diese einerseits gegen Verschieben und andererseits gegen Drehung gesichert.

## Patentansprüche

1. Elektrisches Installationsgerät mit einem aus Isolierstoff bestehenden Sockel (11), einem den Sockel (11) tragenden Tragring (20) und einem dem Sockel (11) vorgesetzten Frontelement (25),
**dadurch gekennzeichnet,**
**dass** der Tragring (20) längs des Sockels (11) verschiebbar und in mindestens zwei Positionen fixierbar ist.

2. Elektrisches Installationsgerät nach Anspruch 1, **dadurch gekennzeichnet, dass** ein wahlweise zu benutzender Distanzring (35) vorgesehen ist, der das Frontelement (25) nach hinten verlängert.

3. Elektrisches Installationsgerät nach Anspruch 1 oder 2, **dadurch gekennzeichnet, dass** der Sockel (11) einen flanschartigen vorderen Rand (14) aufweist, der einen Endanschlag für den Tragring (20) bildet.

4. Elektrisches Installationsgerät nach einem der Ansprüche 1 - 3, **dadurch gekennzeichnet, dass** der Rand (14) Fixierelemente zum Zentrieren des Distanzringes (35) relativ zu dem Tragring (20) bildet.

5. Elektrisches Installationsgerät nach einem der Ansprüche 1 - 4, **dadurch gekennzeichnet, dass** der Sockel (11) als Gehäuse ausgebildet ist und eine umlaufende Seitenwand (12) und einen Boden (13) aufweist.

6. Elektrisches Installationsgerät nach einem der Ansprüche 1 - 5, **dadurch gekennzeichnet, dass** der Sockel (11) flexible Rastelemente (30) zum Fixieren des Tragringes (20) aufweist, die quer zur Seitenfläche (12) des Sockels (11) federn.

7. Elektrisches Installationsgerät nach Anspruch 6, **dadurch gekennzeichnet, dass** die Rastelemente (30) sägezahnförmig sind.

8. Elektrisches Installationsgerät nach einem der Ansprüche 1 - 7, **dadurch gekennzeichnet, dass** ein das Frontelement (25) bzw. den Distanzring (35) umgebender Blendrahmen (27) vorgesehen ist.

9. Elektrisches Installationsgerät nach einem der Ansprüche 1 - 8, **dadurch gekennzeichnet, dass** das Installationsgerät eine Steckdose mit einer Zusatzfunktion ist, wobei der Sockel (11) an seinem hinteren Ende elektrische Bauteile trägt.
